(19) Europäisches Patentamt European Patent Office Office européen des brevets

(11) **EP 1 815 605 B1**

(12) **FASCICULE DE BREVET EUROPEEN**

(45) Date de publication et mention
de la délivrance du brevet:
**15.04.2009 Bulletin 2009/16**

(21) Numéro de dépôt: **05801538.9**

(22) Date de dépôt: **25.10.2005**

(51) Int Cl.:
*H04B 1/38* (2006.01)

(86) Numéro de dépôt international:
**PCT/EP2005/055541**

(87) Numéro de publication internationale:
**WO 2006/045803 (04.05.2006 Gazette 2006/18)**

(54) **Procédé pour caracteriser les émetteurs par association de parametres lies è une meme émetteur radio-électrique**

Verfahren zur Charakterisierung von Emittern durch die Assoziation von mit selbigen Funkemitter zusammenhängenden Parametern

Method for characterising emitters by the association of parameters related to the same radio emitter

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.10.2004 FR 0411448**

(43) Date de publication de la demande:
**08.08.2007 Bulletin 2007/32**

(73) Titulaire: **THALES**
**92200 Neuilly sur Seine (FR)**

(72) Inventeur: **FERREOL, Anne**
**F-92000 COLOMBES (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 853 480**

- **FIORI S; FABA A; ALBINI L; CARDELLI E; BURRASCANO P: "Numerical modeling for the localization and the assessment of electromagnetic field sources" IEEE TRANSACTIONS ON MAGNETICS, vol. 39, no. 3, mai 2003 (2003-05), pages 1638-1641, XP002331897 USA**
- **GAOMING HUANG; LUXI YANG; ZHENYA HE: "Application of blind source separation to a novel passive location" PROCEEDINGS ICA 2004, SPRINGER-VERLAG, vol. 3195, septembre 2004 (2004-09), pages 1134-1141, XP002331898 BERLIN**
- **HYVORINEN AAPO: "Fast and Robust Fixed-Point Algorithms for Independent Component Analysis" IEEE TRANSACTIONS ON NEURAL NETWORKS, IEEE INC, NEW YORK, US, 1999, pages 1-17, XP002980698 ISSN: 1045-9227**

**Description**

L'invention concerne notamment un procédé de localisation passive d'émetteurs, fixes ou mobiles, au sol. L'objectif est notamment de déterminer la position d'un ou de plusieurs émetteurs au sol à partir d'un système de réception mobile.

Elle s'applique aussi pour des configurations où les émetteurs sont en altitude et le système de réception au sol.

L'association de paramètres permet aussi de caractériser un émetteur par son rapport signal sur bruit. On peut aussi caractériser une EVF (Evasion de Fréquence) par ses durées paliers, ses fréquences d'apparition et sa direction d'arrivée. Il est aussi possible de caractériser une modulation en identifiant par exemple ses états d'amplitude et de phase.

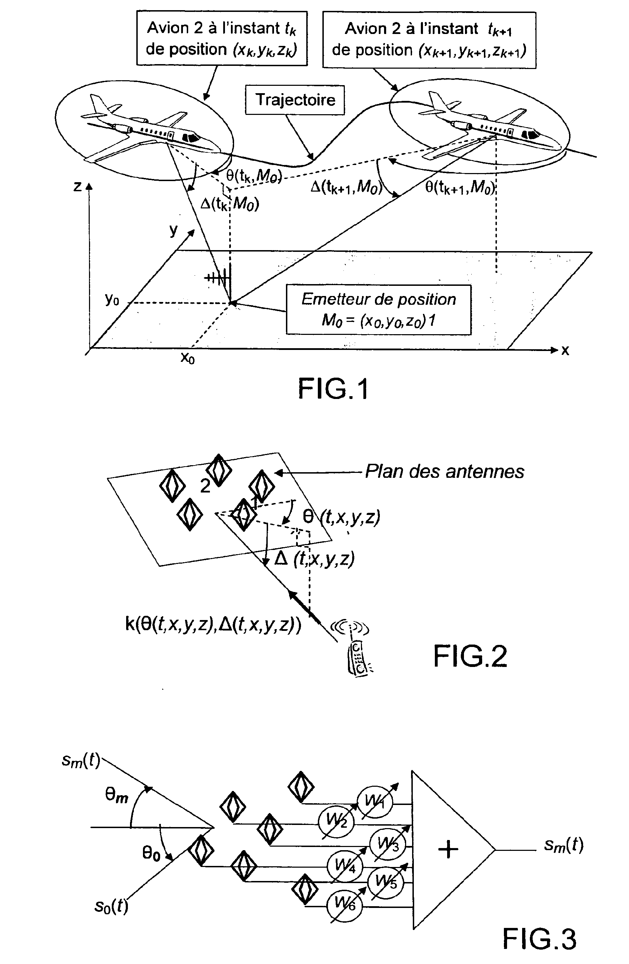

La Figure 1 illustre une localisation aéroportée avec un système de réception mobile, l'émetteur 1 est à la position $(x_0, y_0, z_0)$, le porteur 2 à l'instant $t_k$ est à la position $(x_k, y_k, z_k)$ et voit l'émetteur 1 sous l'incidence $(\theta(t_k, x_0, y_0, z_0), \Delta(t_k, x_0, y_0, z_0))$. Les angles $\theta(t, x_0, y_0, z_0)$ et $\Delta(t, x_0, y_0, z_0)$ évoluent au cours du temps et dépendent de la position de l'émetteur ainsi que de la trajectoire du système de réception. Les angles $\theta(t, x_0, y_0, z_0)$ et $\Delta(t, x_0, y_0, z_0)$ sont repérés à l'aide d'un réseau de N antennes pouvant être fixées sous le porteur comme le montre la figure 2.

Les antennes Ai du réseau reçoivent les sources avec une phase et une amplitude dépendant de l'angle d'incidence des sources ainsi que de la position des antennes.

Les techniques de traitement d'antennes exploitent généralement la diversité spatiale des sources (ou émetteurs): utilisation de la position spatiale des antennes du réseau pour mieux exploiter les différences en incidence et en distance des sources. Le traitement d'antennes se décompose en deux grands domaines d'activités : 1-Le filtrage spatial, illustré figure 3, qui a pour objectif d'extraire soit les signaux modulés $s_m(t)$, soit les symboles contenus dans le signal (Démodulation). Ce filtrage consiste à combiner les signaux reçus sur le réseau de capteurs afin de former une antenne de réception optimale pour une des sources. Le filtrage spatial peut être aveugle ou coopératif.

Il est coopératif lorsqu'il existe une connaissance a priori sur les signaux émis (directions d'arrivées, séquences de symboles,... ) et il est aveugle dans le cas contraire. Il est utilisé pour la séparation de sources en aveugle, le filtrage adapté sur direction d'arrivée (formation de faisceaux) ou sur répliques, le MODEM multi-capteurs (démodulation ), etc. 2-L'estimation des paramètres des émetteurs a pour objectif de déterminer divers paramètres comme: leurs fréquences Doppler, leurs débits binaires, leurs indices de modulations, leurs positions $(x_m, y_m)$, leurs incidences $(\theta_m, \Delta_m)$ et leurs vecteurs directeurs $\mathbf{a}(\theta_m, \Delta_m)$ (réponse du réseau de capteurs à une source de direction $(\theta_m, \Delta_m)$) etc.

Dans ce domaine, il existe par exemple la goniométrie et les méthodes d'identification aveugle :

La goniométrie a pour objectif de déterminer les incidences $\theta(t, x_m, y_m, z_m)$ en 1 D ou le couple d'incidences $(\theta(t, x_m, y_m, z_m), \Delta(t, x_m, y_m, z_m))$ en 2D. Pour cela les algorithmes de goniométrie utilisent les observations issues des antennes

ou capteurs. Lorsque les ondes de tous les émetteurs se propagent dans le même plan, il suffit d'appliquer une goniométrie 1 D, dans les autres cas, une goniométrie 2D.

Les méthodes d'identifications aveugle (ICA) ont notamment pour objectif de déterminer les vecteurs directeurs $\mathbf{a}(\theta_m, \Delta_m)$ de chacun des émetteurs. Une telle méthode est utilisée dans le document "Numerical Modeling for the Localization and the Assesment of Electromagnetic Field Sources", IEEE Transactions on Magnetics, vol. 38, No. 3, May 2003.

Les techniques connues de localisation selon l'art antérieur utilisent généralement des techniques histogrammiques pour regrouper les paramètres. Ces techniques présentent toutefois l'inconvénient de nécessiter une connaissance a priori sur l'écart type des paramètres pour fixer le pas de l'histogramme.

L'invention repose sur une nouvelle approche consistant notamment à associer de manière judicieuse les paramètres liés à un même émetteur.

L'invention concerne un procédé pour caractériser un ou plusieurs émetteurs et/ou un ou plusieurs paramètres associés à un émetteur en utilisant une station de réception comprenant un dispositif adapté à mesurer au cours du temps un ensemble de K vecteurs de paramètres $\hat{\eta}_k = \eta_m + \mathbf{e}_k$ pour $1 \leq k \leq K$ et $1 \leq m \leq M$ dépendant des émetteurs associés à des vecteurs $\eta_m$ représentatifs des émetteurs pour $1 \leq k \leq k$, où $\mathbf{e}_k$ est le vecteur bruit associé à la $k^{\text{ième}}$ mesure et $\eta_m$ le vecteur de paramètres associé au $m^{\text{ième}}$ émetteur caractérisé en ce qu'il comporte au moins une étape d'extraction du ou des paramètres consistant à regrouper par émetteur les paramètres qui lui sont associés au moyen d'une technique d'analyse en composante indépendante.

Le procédé selon l'invention présente notamment les avantages suivants :

- Il ne nécessite aucun paramètre de réglages et aucune connaissance a priori sur les statistiques des paramètres,
- il permet de compter le nombre d'émetteurs à partir du nombre de valeurs dominantes d'une matrice de covariance des paramètres $(\hat{\mathbf{R}}_{xx})$ : utilisation des techniques de détection du nombre de sources de la goniométrie,
- il permet d'identifier autant de vecteurs de paramètres $(\eta_m)$ que l'on souhaite,
- il permet d'utiliser l'étape d'association des paramètres de nature différente comme l'incidence des sources, leur rapport signal sur bruit

ou encore leurs vecteurs directeurs,

- • il permet de déterminer l'incidence moyenne de chaque émetteur incident à partir des incidences mesurées,
- • d'effectuer la localisation moyenne de chaque émetteur incident à partir des vecteurs directeurs mesurés ou des incidences mesurées,
- • d'extraire les états de phases d'une modulation à partir des parties réelles et imaginaires du signal d'une modulation linéaire,
- • d'extraire les états de phases d'une modulation à partir des parties réelles et imaginaires du signal d'une modulation linéaire,
- • de séparer les signaux à Evasion de Fréquence, EVF, à partir de la mesure des durées paliers et des incidences : une EVF est

caractérisée par une seule incidence et un seul palier.

D'autres caractéristiques et avantages de la présente invention apparaîtront mieux à la lecture de la description qui suit d'un exemple de réalisation donné à titre illustratif et nullement limitatif annexée des figures qui représentent :

- • La figure 1 un exemple de localisation aéroportée avec un système de réception mobile,
- • La figure 2 un réseau de 5 antennes,
- • La figure 3 un schéma de filtrage spatial par formation de faisceau dans une direction,
- • Les figures 4, 5 et 6 un exemple chiffré de l'utilisation du procédé selon l'invention.

L'exemple suivant est donné en relation avec la figure 1, comprenant un émetteur 1 à localiser en utilisant un avion 2 équipé de dispositifs permettant la mesure de paramètres associés aux émetteurs et d'un processeur adapté à exécuter les étapes selon l'invention.

En présence de $M$ émetteurs, un système de localisation mesure, par exemple au cours du temps, un ensemble de $K$ paramètres (représentatifs des sources émettrices) caractérisés par les vecteurs $\eta_k$ pour $1 \le k \le K$. Les vecteurs $\eta_k$ sont par exemple composés de l'azimut $\theta_k$ et du rapport signal sur bruit $SNR_k$ d'un des émetteurs à l'instant $t_k$: $\eta_k = [\theta_k \ SNR_k]^T$ où $(^T)$ désigne le transposé d'un vecteur.

Ce vecteur peut aussi être composé du vecteur directeur $\mathbf{a}(\theta_k)$ d'une des sources et de son rapport signal sur bruit : $\eta_k = [\mathbf{a}(\theta_k)^T \ SNR_k]^T$.

De façon plus générale la $k^{\text{ième}}$ mesure $\hat{\mathbf{n}}_k$ est entachée d'une erreur et est associée au $m^{\text{ième}}$ émetteur de la façon suivante :

$$\hat{\boldsymbol{\eta}}_k = \eta_m + \mathbf{e}_k \text{ pour } 1 \le k \le K \text{ et } 1 \le m \le M \qquad (1)$$

où $\mathbf{e}_k$ est le vecteur bruit associé à la $k^{\text{ième}}$ mesure et $\eta_m$ le vecteur de paramètres associé au $m^{\text{ième}}$ émetteur. L'invention consiste notamment à extraire les $M$ vecteurs $\eta_m$ associés à un émetteur m au milieu des $K$ mesures $\hat{\eta}_k$.

**Méthode d'identification des vecteurs de paramètres des sources principales**

Grâce au système de localisation équipant l'avion ou plus généralement un système effectuant des mesures de paramètres, on dispose de $K$ mesures $\hat{\eta}_k$. L'objectif premier de l'invention est d'identifier les $M$ vecteurs $\eta_m$ associés aux $M$ émetteurs incidents.

Pour cela, le procédé comprend une première étape consistant à transformer les vecteurs mesurés $\hat{\eta}_k$ en des vecteurs $f(\hat{\eta}_k)$ de dimension plus grande.

Pour un système de goniométrie en azimut $\theta_k$ où le vecteur $\hat{\eta}_k$ est égal à $[SNR_k]^T$ (azimut et rapport signal sur bruit), l'étape de transformation consiste à effectuer la transformation bijective suivante :

$$f(\hat{\boldsymbol{\eta}}_k = \begin{bmatrix} \hat{\theta}_k \\ SNR_k \end{bmatrix}) = \begin{bmatrix} 1 \\ \exp(j\hat{\theta}_k) \\ \vdots \\ \exp(jL\hat{\theta}_k) \\ SNR_k \end{bmatrix} \qquad (2)$$

Pour un système de goniométrie en azimut $\theta_k$ et en site $\Delta_k$ où le vecteur représentatif de l'ensemble des paramètres K mesurés pour les M émetteurs $\hat{\eta}_{k.} = [\theta_k\ \Delta_k\ SNR_k]^T$ l'étape de transformation consiste à effectuer la transformation bijective suivante :

$$f(\hat{\boldsymbol{\eta}}_k = \begin{bmatrix} \hat{\theta}_k \\ \hat{\Delta}_k \\ SNR_k \end{bmatrix}) = \begin{bmatrix} 1 \\ \exp(j\hat{\theta}_k) \\ \exp(j\hat{\Delta}_k) \\ \exp(j\hat{\theta}_k)\exp(j\hat{\Delta}_k) \\ \vdots \\ SNR_k \end{bmatrix} \qquad (3)$$

Pour un système de goniométrie en présence de signaux EVF dont on a mesuré les incidences $\hat{\theta}_k$, et les durées paliers $\hat{T}_k$ le vecteur $\hat{\eta}_k$ s'écrit : $\hat{\eta}_{k.} = .[\hat{\theta}_k\ \hat{T}_k]^T$. L'étape de transformation de $\hat{\eta}_k$ consiste à effectuer la transformation bijective suivante :

$$f(\hat{\boldsymbol{\eta}}_k = \begin{bmatrix} \hat{\theta}_k \\ \hat{T}_k \end{bmatrix}) = \begin{bmatrix} 1 \\ \hat{\theta}_k \\ \hat{T}_k \end{bmatrix} \qquad (4)$$

Pour un système cherchant à extraire les états de phase d'un émetteur à partir du signal x(kT) de la BPSK, le vecteur $\hat{\eta}_k$ s'écrit :

$$\hat{\boldsymbol{\eta}}_k = \begin{bmatrix} \Re(x(kT)) \\ \Im(x(kT)) \end{bmatrix} \qquad (5)$$

Où $\Re(z)$ et $\Im(z)$ désignent les parties réelle et imaginaire du complexe z et T est le rythme symbole. Dans le cas d'un émetteur BPSK à 2 états de phase on est en présence de M=2 états tels que :

$$\eta_1 = \begin{bmatrix} \cos(\varphi) \\ \sin(\varphi) \end{bmatrix} \text{ et } \eta_2 = \begin{bmatrix} -\cos(\varphi) \\ -\sin(\varphi) \end{bmatrix} \qquad (6)$$

La détermination des vecteurs $\eta_1$ et $\eta_2$ permettra de déduire la rotation de phase $\varphi$ de la BPSK. Dans ce cas on peut construire le vecteur $f(\hat{\eta}_k)$ suivant :

$$f(\hat{\boldsymbol{\eta}}_k) = \begin{bmatrix} 1 \\ \Re(x(kT)) \\ \Im(x(kT)) \end{bmatrix} \qquad (7)$$

La longueur du vecteur $f(\hat{\eta}_k)$ détermine le nombre maximum d'émetteurs identifiables. Dans une application de type goniométrique estimant les incidences $\theta$ ou $(\theta, \Delta)$ on peut dire par exemple que ce nombre maximal ne dépassera pas le nombre de capteurs du réseau ayant permis la goniométrie.

A partir des $K \geq dim(.f(\hat{\eta}_k))$ vecteurs $f(\hat{\eta}_k)$ le procédé calcule ensuite la matrice de covariance suivante :

$$\hat{\mathbf{R}}_{xx} = \frac{1}{K} \sum_{k=1}^{K} [f(\hat{\boldsymbol{\eta}}_k) \otimes f(\hat{\boldsymbol{\eta}}_k)] [f(\hat{\boldsymbol{\eta}}_k) \otimes f(\hat{\boldsymbol{\eta}}_k)]^H \qquad (8)$$

où $\otimes$ désigne le produit de Kronecker tel que $\mathbf{u} \otimes \mathbf{v} = [\mathbf{u}(1) \, \mathbf{v}^T \, \mathbf{u}(2) \, \mathbf{v}^T \, ...]$ et $(.)^H$ le transposé et le conjugué. Cette matrice $\hat{\mathbf{R}}_{xx}$ s'écrit aussi :

$$\hat{\mathbf{R}}_{xx} = \sum_{m=1}^{M} r\rho_m [f(\eta_m) \otimes f(\eta_m)] [f(\eta_m) \otimes f(\eta_m)]^H + \mathbf{R}_{bb} \qquad (9)$$

où $\mathbf{R}_{bb}$ est une matrice de bruit et $\rho_m$ est le nombre de vecteurs $f(\hat{\eta}_k)$ associés au vecteur $f(\eta_m)$.

La matrice $\hat{\mathbf{R}}_{xx}$ est la matrice de covariance des K observations $f(\hat{\eta}_k) \otimes f(\hat{\eta}_k)$. D'après l'équation (9) elle se réduit à la matrice de covariance des signatures $f(\eta_m) \otimes f(\eta_m)$ des M émetteurs. Sachant que les signatures $f(\eta_m) \otimes f(\eta_m)$ sont toutes différentes car les émetteurs sont associés à des paramètres différents, les composantes principales de la matrice $\hat{\mathbf{R}}_{xx}$ (vecteurs propres associés aux M plus fortes valeurs propres) définissent le même espace que les M signatures $f(\eta_m) \otimes f(\eta_m)$ des émetteurs : $\hat{\mathbf{R}}_{xx}$ est complètement lié à l'espace vectoriel des M signatures $f(\eta_m) \otimes f(\eta_m)$ des émetteurs.

Le rang de la matrice $\hat{\mathbf{R}}_{xx}$ est ainsi égal au nombre d'émetteurs $M$. Ce rang peut être déterminé à partir des valeurs propres de cette matrice. Ainsi en présence d'un vecteur $f(\hat{\eta}_k)$ de dimension $N$, la matrice $\hat{\mathbf{R}}_{xx}$ est de dimension $N^2 \times N^2$ et il est alors possible d'identifier au maximum $N^2$ émetteurs.

Le procédé comporte ensuite une étape d'identification des vecteurs transformés $f(\eta_m)$ à partir de $\hat{\mathbf{R}}_{xx}$ pour ensuite en déduire les vecteurs de paramètres $\eta_m$ de chacun des émetteurs.

Pour cela la première opération consiste à réaliser la décomposition en éléments propres de la matrice $\hat{\mathbf{R}}_{xx}$ pour obtenir ses valeurs propres.

A partir des valeurs propres de la matrice, il est possible de déterminer le nombre de sources $M$ en appliquant, par exemple, la méthode décrite dans la référence [4] ou toute autre méthode de « dénombrement » qui permet de compter le nombre de composantes principales de la matrice $\hat{\mathbf{R}}_{xx}$. Ce nombre dans l'exemple donné est lié au nombre M d'émetteurs.

A partir des $M$ éléments propres associés aux plus fortes valeurs propres $\lambda_m$ on peut déterminer la racine carrée de la matrice $\hat{\mathbf{R}}_{xx}$ :

$$\hat{\mathbf{R}}_{xx}^{1/2} = \mathbf{E}_s \Lambda_s^{\frac{1}{2}} = \mathbf{B} \, \Omega^{\frac{1}{2}} \mathbf{U}^H \text{ tel que } \mathbf{B} = [f(\eta_1) \otimes f(\eta_1) \dots f(\eta_M) \otimes f(\eta_M)]$$

et

$$\Omega = \text{diag}\{\rho_1 \dots \rho_M\} \qquad (10)$$

où $\text{diag}\{..\}$ est une matrice diagonale composée des éléments de $\{..\}$, $\mathbf{E}_s$ et $\Lambda_s = \text{diag}\{\lambda_1 \dots \lambda_M\}$ sont composés respectivement des vecteurs propres et valeurs propres de $\hat{\mathbf{R}}_{xx}$ associés aux $M$ plus fortes valeurs propres: $\lambda_1 \geq \dots \geq \lambda_M$.

Les colonnes de la matrice **B** sont composées des signatures $f(\eta_m) \otimes f(\eta_m)$ de chacun des émetteurs.

La matrice $\hat{\mathbf{U}}$ est unitaire ($\mathbf{U}^H \mathbf{U} = I_M$ où $I_M$ est la matrice identité de dimension $N \times N$). Sachant que les colonnes de la racine carrée $\hat{\mathbf{R}}_{xx}^{\frac{1}{2}}$ sont dans le même espace que les colonnes $f(\eta_m) \otimes f(\eta_m)$ de la matrice **B**, la matrice **U** est une matrice de changement de base. La matrice **U** est de plus unitaire car ses colonnes sont des vecteurs orthogonaux entre eux. Dans la suite de la description le procédé va utiliser cette propriété d'orthogonalité pour identifier la matrice **U**. Pour l'identification de **U** le procédé va de plus utiliser la structure redondante de **B** qui est lié au produit de Kronecker $\otimes$.

La détermination de **U** se fait par exemple en exploitant la structure redondante de la matrice **B**, soit :

$$\mathbf{B} = \begin{bmatrix} \mathbf{A}\,\Phi_1 \\ \vdots \\ \mathbf{A}\,\Phi_N \end{bmatrix} \text{ avec } \mathbf{A} = [\,f(\eta_1)\,\ldots f(\eta_M)] \text{ et } \Phi_n = \mathrm{diag}\{\,f_n(\eta_1)\,\ldots f_n(\eta_M)\} \qquad (11)$$

où $f_n(\eta_m)$ est la $n^{\text{ième}}$ composante du vecteur $f(\eta_m)$ de dimension $N \times 1$.

Dans ces conditions la matrice $\hat{\mathbf{R}}_{xx}^{1/2}$ est composée de $N$ sous-blocs $\Gamma_n$ tels que :

$$\hat{\mathbf{R}}_{xx}^{1/2} = \begin{bmatrix} \Gamma_1 \\ \vdots \\ \Gamma_N \end{bmatrix} = \mathbf{B}\,\mathbf{U}^H \text{ avec } \Gamma_n = \mathbf{A}\,\Phi_n\,\mathbf{U}^H \qquad (12)$$

Les colonnes de chaque matrice $\Gamma_n$ sont dans le même espace vectoriel que les signatures recherchées $f(\eta_m)$ de chacun des M émetteurs. Les matrices $\Gamma_n$ diffèrent par des matrices de changement de base qui sont égales à une matrice diagonale près à la matrice **U** unitaire recherchée. Ces propriétés des matrices $\Gamma_n$ dépendent de la structure redondante de la matrice **B**.

En conséquence les matrices $\psi_{ij}$ suivantes :

$$\Psi_{ij} = \Gamma_i^{\#}\,\Gamma_j = \mathbf{U}\,\Phi_i^{-1}\,\Phi_j\,\mathbf{U}^H \qquad (13)$$

ont toutes pour matrice de vecteurs propres la matrice **U** (# désigne la pseudo inverse telle que $\Gamma^{\#} = (\Gamma^H \Gamma)^{-1} \Gamma^H$).

Le procédé utilise le caractère unitaire de la matrice **U** pour l'identifier : Les colonnes de **U** sont des vecteurs orthogonaux.

Dans ces conditions, pour déterminer la matrice unitaire **U** on effectue la diagonalisation conjointe de la méthode JADE décrite par exemple dans la référence [5] des matrices suivantes ou de tout autre méthode connue de l'Homme du métier :

$$\Psi_{ij} \text{ pour } (1 \leq i \leq N \text{ et } j < i) \qquad (14)$$

Une fois estimée la matrice **U** on peut en déduire la matrice **B** à une amplitude près en effectuant d'après la relation (10) :

$$\hat{\mathbf{B}} = \mathbf{B}\,\Omega^{\frac{1}{2}} = \hat{\mathbf{R}}_{xx}^{1/2}\,\mathbf{U} = [\,f(\eta_1) \otimes f(\eta_1)\,\sqrt{\rho_1}\,\ldots f(\eta_M) \otimes f(\eta_M)\,\sqrt{\rho_M}] \qquad (15)$$

Sachant que la $m^{\text{ième}}$ colonne de la matrice $\hat{\mathbf{B}}$ s'écrit $\mathbf{b}_m = [\,\mathbf{b}_{m1}^T\,\ldots\,\mathbf{b}_{mN}^T]^T = f(\eta_m) \otimes f(\eta_m)\,\sqrt{\rho_m}$

on la transforme en la matrice $\mathbf{B}_m$ suivante :

$$\mathbf{B}_m = [\mathbf{b}_{m1} \dots \mathbf{b}_{mN}] = f(\eta_m)\,f(\eta_m)^{\mathrm{T}} \sqrt{\rho_m} \qquad (16)$$

où les $\mathbf{b}_{mi}$ sont des vecteurs de dimensions Nx1.

Sachant que la 1ère composante de $f(\eta_m)$ est égale à 1, on déduit $f(\eta_m)$ de $\mathbf{B}_m$ en prenant le vecteur singulier $\mathbf{e}_m$ de $\mathbf{B}_m$ associé à la plus forte valeur singulière et en effectuant $f(\eta_m) = \mathbf{e}_m / \mathbf{e}_m(1)$ où $\mathbf{e}_m(1)$ est la première composante du vecteur $\mathbf{e}_m$. Le procédé effectue cette normalisation car les vecteurs $f(\eta_k)$ sont toujours construits avec une première composante égale à 1. Ces étapes de construction de $f(\eta_k)$ et de normalisation de $\mathbf{e}_m$ permettent de lever l'ambiguïté de phase des vecteurs singuliers $\mathbf{e}_m$.

A partir des vecteurs transformés $f(\eta_m)$ on en déduit les M vecteurs principaux $\eta_m$ car $f(.)$ est bijectif.

Ayant identifié les $M$ vecteurs principaux $\eta_m$, le procédé effectue par exemple des statistiques sur les composantes de chacun des vecteurs. Pour une application de type localisation cette étape permet notamment de donner en plus de la position moyenne de l'émetteur, une fourchette d'erreur sur l'estimation de la position.

Par exemple pour le vecteur $\eta_m = [\theta_m\ SNR_m]^{\mathrm{T}}$ ($1 \le m \le M$), le procédé détermine les statistiques de l'azimut $\theta_m$ (biais et écart type) pour donner la valeur de l'azimut dans une fourchette.

La première étape consiste à déterminer l'ensemble $\Phi_m$ des vecteurs $\hat{\eta}_k$ associés à l'émetteur de vecteur moyen $\eta_m$.
Sachant que :

$$(\mathbf{F}^{\mathrm{H}}\,\mathbf{F})^{-1}\,\mathbf{F}^{\mathrm{H}}\,f(\eta_m) = \delta_m = \begin{bmatrix} \mathbf{0}_{m-1} \\ 1 \\ \mathbf{0}_{M-m} \end{bmatrix} \text{ avec } \mathbf{F} = [\,f(\eta_1) \dots f(\eta_M)] \qquad (17)$$

où $\mathbf{0}_L$ est un vecteur nul de dimension $L$x1.

Ainsi toutes les composantes de $\delta_m$ sont nulles à l'exception de la mième qui vaut 1. Il faut remarquer que la matrice de filtrage $(\mathbf{F}^{\mathrm{H}}\,\mathbf{F})^{-1}\,\mathbf{F}^{\mathrm{H}}$ est un séparateur des émetteurs : En appliquant ce filtre sur une signature $f(\eta_m)$ du mième émetteur seule la composante associé à cet émetteur est non nul.

Ainsi pour déterminer l'ensemble $\Phi_m$ auxquelles appartient le vecteur $\hat{\eta}_k$ le procédé utilise la propriété de l'équation (17) ( où la matrice $(\mathbf{F}^{\mathrm{H}}\,\mathbf{F})^{-1}\,\mathbf{F}^{\mathrm{H}}$ a pour objectif de séparer les émetteurs) en calculant le vecteur $\beta_k$ de l'équation (14) qui doit être proche de $\delta_m$ lorsque $f(\hat{\eta}_k)$ est associé à la mième source.

$$(\mathbf{F}^{\mathrm{H}}\,\mathbf{F})^{-1}\,\mathbf{F}^{\mathrm{H}}\,f(\hat{\eta}_k) = \beta_k \qquad (18)$$

Le vecteur $\hat{\eta}_k$ appartient à l'ensemble $\Phi_m$ de la mième source si la mième composante $\beta_k(m)$ de plus grand module vérifie : $|\beta_k(m)| > \alpha$.
Le seuil $\alpha$ est choisi proche de 1 (typiquement $\alpha = 0.9$).
Les étapes du procédé de constitution des ensembles $\Phi_m$ en présence de $K$ vecteurs $\hat{\eta}_k$ comportent par exemple les étapes suivantes :

    **Etape R.1** k=1 et initialisation des $M$ ensembles $\Phi_m$ à $\varnothing$ (ensemble vide),
    **Etape R.2** Calcul du vecteur $\beta_k$ en utilisant l'équation (18).
    **Etape R.3** Recherche de la composante $\beta_k(i_{max})$ telle que : $|\beta_k(i_{max})| > \beta_k(i)$ pour $i \# i_{max}$.
    **Etape R.4** Si $|\beta_k(i_{max})| > \alpha$ alors $\Phi_{imax} = \{\Phi_{imax}\ \hat{\eta}_k\}$,
    **Etape R.5** $k \leftarrow k + 1$,
    **Etape R.6** Si $k < K$ retour à l'étape R.2.

Une fois les $M$ ensembles $\Phi_m = \{\hat{\eta}_k$ proche de $\eta_m\}$ déterminés, le procédé effectue un calcul de statistique des composantes du vecteur $\eta_m$ par exemple en Erreur Quadratique Moyenne ou EQM.
L'erreur Quadratique Moyenne (EQM) de la $i$ième composante de $\eta_m$ s'écrit :

$$EQM_m(i)^2 = \frac{1}{card(\Phi_m)} \sum_{\hat{\eta}_k \in \Phi_m} (\hat{\eta}_k(i) - moy_m(i))^2$$

avec

$$moy_m(i) = \frac{1}{card(\Phi_m)} \sum_{\hat{\eta}_k \in \Phi_m} \hat{\eta}_k(i) \qquad (19)$$

où card($\Phi_m$) est le cardinal de l'ensemble $\Phi_m$ et $moy_m(i)$ est la valeur moyenne devant être proche de $\eta_m(i)$.

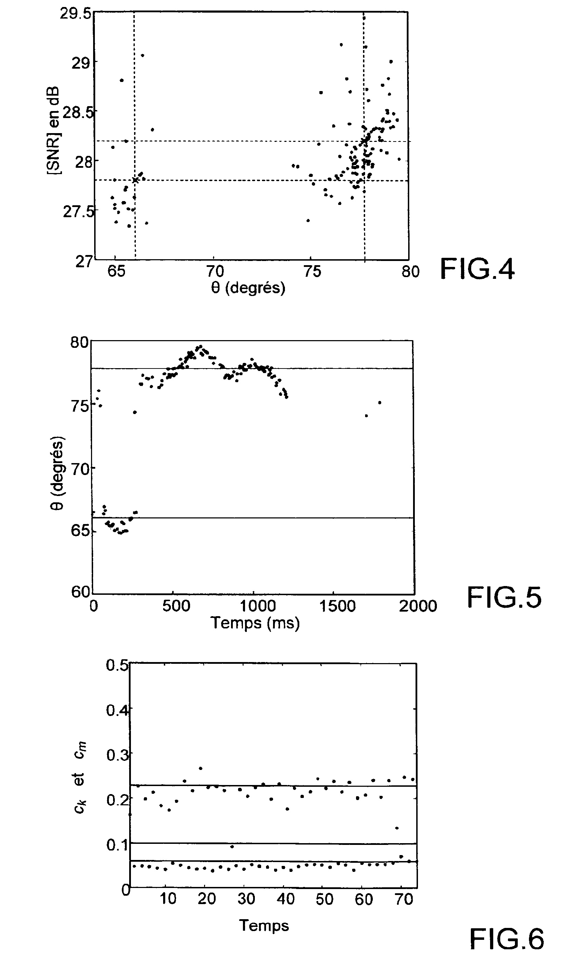

Dans l'exemple des Figures 4 et 5 le vecteur $\hat{\eta}_k = [\theta_k^T \, SNR_k]^T$ et la fonction $f(.)$ vérifient :

$$f(\hat{\eta}_k = \begin{bmatrix} \hat{\theta}_k \\ SNR_k \end{bmatrix}) = \begin{bmatrix} 1 \\ \exp(j\hat{\theta}_k) \\ \exp(2j\hat{\theta}_k) \\ SNR_k \end{bmatrix} \qquad (20)$$

La Figure 4 suivante montre la répartition des plots de goniométrie dans l'espace ($\theta_k$, $SNR_k$) :
et la Figure 5 , l'évolution de ces plots au cours du temps :
Le procédé donne pour les *M*=2 sources :

- $\theta_1$=66.06˚ et SNR$_2$=27.78 dB
- $\theta_2$=77.77˚ et SNR$_2$=28.17 dB

Sur les Figures 4 et 5 apparaissent en trait plein les valeurs moyennes estimées par le procédé.
Dans l'exemple de la Figure 6 le vecteur $\hat{\eta}_k = [\mathbf{a}(\theta_k)^T SNR_k]^T$ et la fonction $f(.)$ vérifient :

$$f(\hat{\eta}_k) = \begin{bmatrix} 1 \\ \mathbf{a}(\hat{\theta}_k) \\ SNR_k / (\max(SNR_k) - \min(SNR_k)) \end{bmatrix} \qquad (21)$$

Sur la figure 6 sont représentés en pointillés les coefficients $c_k = |\mathbf{1}^H \mathbf{a}(\hat{\theta}_k)|$ et en trait plein les coefficients $c_m = |\mathbf{1}^H \mathbf{a}(\theta_m)|$ où le vecteur directeur $\mathbf{a}(s_m)$ a été déduit des *M* vecteurs $\mathbf{s}_m$ estimés par le procédé.
Le vecteur **1** est composé de 1.
Le procédé a détecté *M*=3 catégories de sources.
La Figure 6 montre que deux des catégories sont présentes en permanence tandis que la dernière est présente de façon beaucoup plus sporadique.
Ces exemples montrent que le procédé s'applique de manière indépendante au type de paramètres des sources.
Sans sortir du cadre de l'invention, le procédé peut s'appliquer pour des directions d'arrivée $\theta_m$, des vecteurs directeurs $\mathbf{a}(\theta m)$ ou encore des rapports signaux sur bruit $SNR_m$.

**Bibliographie**

[1] L.ALBERA, A.FERREOL, P.CHEVALIER et P.COMON. GRETSI 2003 , Paris , septembre 2003, « ICAR, un algorithme d'ICA à convergence rapide, robuste au bruit ».

[2] L.ALBERA, A.FERREOL et P.CHEVALIER. ICA2003 , Nara (Japon), avril 2003, Sixth order blind identification of undetermined mixtures (SIRBI) of sources.

[3] P. COMON, Signal Processing, Elsevier, avril 1994, vol 36", n˚3, pp 287-314, Independent Component Analysis, a new concept~?.

[4] O.MICHEL, P.LARZABAL et H.CLERGEOT Test de détection du nombre de sources corrélées pour les méthodes HR en traitement d'antenne. GRETSI 91 à Juans les Pins.

[5] J.F. CARDOSO, A. SOULOUMIAC, IEE Proceedings-F, Vol.140, N˚6, pp. 362-370, Dec. 1993. Blind beamforming for non-gaussian signals.

**Revendications**

1. Procédé pour caractériser un ou plusieurs émetteurs et/ou un ou plusieurs paramètres associés à un émetteur en utilisant une station de réception comprenant un dispositif adapté à mesurer au cours du temps un ensemble de K vecteurs de paramètres $\hat{\eta}_k = \eta_m + \mathbf{e}_k$ pour $1{\leq}k{\leq}K$ et $1{\leq}m{\leq}M$ dépendant des émetteurs associés à des vecteurs $\eta_m$ représentatifs des émetteurs pour $1{\leq}k{\leq}K$, où $\mathbf{e}_k$ est le vecteur bruit associé à la $K^{\text{ième}}$ mesure et $\eta_m$ le vecteur de paramètres associé au $m^{\text{ième}}$ émetteur, avec au moins une étape d'extraction du ou des paramètres consistant à regrouper par émetteur les paramètres qui lui sont associés au moyen d'une technique d'analyse en composante indépendante et **caractérisé en ce que** l'étape d'association des paramètres pour chaque émetteur M comporte au moins les étapes suivantes :

   **Etape n˚1** Transformer les vecteurs $\hat{\eta}_k$ représentatifs de l'ensemble des K paramètres pour les M émetteurs en vecteurs $f(\hat{\eta}_k)$ en utilisant une fonction $\tilde{f}()$ bijective et où la $1^{\text{ère}}$ composante de $f(\hat{\eta}_k)$ étant égale à 1,
   **Etape n˚2** déterminer une matrice $\hat{\mathbf{R}}_{xx}$ de covariance à partir des vecteurs $f(\hat{\eta}_k)$ et la décomposer en éléments propres, afin d'obtenir ses valeurs propres,
   Où $\hat{\mathbf{R}}_{xx}$ est une matrice liée à l'espace vectoriel des M signatures $f(\eta_m) \otimes f(\eta_m)$ des émetteurs.
   **Etape n˚3** Calculer le rang $M$ de la matrice $\hat{\mathbf{R}}_{xx}$ à partir de ses valeurs propres trouvées à l'étape 2,
   **Etape n˚4** Calculer une racine carrée de $\hat{\mathbf{R}}_{xx}$ avec ses $M$ éléments propres dominants : $\hat{\mathbf{R}}_{xx}^{1/2} = \mathbf{E}_s \Lambda_s^{\frac{1}{2}}$ où $\mathbf{E}_s$ correspond aux vecteurs propres et $\Lambda_s$ aux M plus fortes valeurs propres,

   **Etape n˚5** Déduire de $\hat{\mathbf{R}}_{xx}^{1/2}$ des matrices $\Gamma_n$ suivant $\hat{\mathbf{R}}_{xx}^{1/2} = \begin{bmatrix} \mathbf{\Gamma}_1 \\ \vdots \\ \mathbf{\Gamma}_N \end{bmatrix} = \mathbf{B}\,\mathbf{U}^{\mathrm{H}}$, avec B = [$f(\eta_1) \otimes f(\eta_1) \dots f$

   $(\eta_M) \otimes f(\eta_M)$],
   U : matrice unitaire ; $\mathbf{U}^{\mathrm{H}} \cdot \mathbf{U} = \mathbf{I}_M$,
   $\mathbf{I}_M$: matrice identité de dimension NxN,
   avec $\Gamma_n = \mathbf{A}\,\Phi_n\,\mathbf{U}^{\mathrm{H}}$
   et à partir des $\Gamma_n$

$$A = \left[ f(\eta_1) \cdots f(\eta_M) \right] \;;$$

$$\Phi_n = \operatorname{diag} \left\{ f_n(\eta_1) \cdots f_n(\eta_M) \right\} \;;$$

   $f_n(\eta_m)$ : nième composante du vecteur ($f(\eta_m)$ de dimension Nx1 ;

   calculer $\Psi_{ij}$ suivant $\mathbf{\Psi}_{ij} = \mathbf{\Gamma}_i^{\#}\,\mathbf{\Gamma}_j = \mathbf{U}\,\mathbf{\Phi}_i^{-1}\,\mathbf{\Phi}_j\,\mathbf{U}^{\mathrm{H}}$ pour ($1{\leq}i{\leq}N$ et $j{<}i$),

   $\Gamma^{\#}$ : pseudo-inverse telle que $\Gamma^{\#} = (\Gamma^{\mathrm{H}}\Gamma)^{-1}\,\Gamma^{\mathrm{H}}$
   Où les colonnes de chaque matrice $\Gamma_n$ définissent le même espace vectoriel que les signatures $f(\eta_m)$ des M

émetteurs,
**Etape n˚6** A partir de la diagonalisation conjointe des $\Psi_{ij}$ pour ($1 \leq i \leq N$ et $j < i$) on identifie la matrice unitaire **U**,
**Etape n˚7** Déterminer les vecteurs $f(\eta_m)$ à partir des colonnes $\mathbf{b}_m$ de la matrice $\hat{\mathbf{R}}_{xx}^{1/2}$ U où U est la matrice unitaire : Transformation de la colonne $\mathbf{b}_m$ en la matrice $\mathbf{B}_m$ suivant

$$\mathbf{B}_m = [\mathbf{b}_{m1} \ \dots \ \mathbf{b}_{mN}] = f(\boldsymbol{\eta}_m) \, f(\boldsymbol{\eta}_m)^{\mathrm{T}} \ \sqrt{\rho_{m}}$$

$f_m$ étant le nombre de vecteurs $f(\hat{\eta}_k)$ associés au vecteur $f(\eta_m)$

et extraction de cette matrice du vecteur singulier $\mathbf{e}_m$ associé à la plus forte valeur singulière pour effectuer $f(\eta_m) = \mathbf{e}_m \, \mathbf{e}_m \, (1)$ avec $\mathbf{e}_m \, (1)$ la première composante du vecteur $\mathbf{e}_m$.
**Etape n˚8** Appliquer la transformée inverse de la fonction $\tilde{f}()$ pour en déduire les vecteurs $\eta_m$.

2. Procédé selon la revendication 1 **caractérisé en ce qu'**il comporte au moins une étape d'évaluation des statistiques des composantes des vecteurs $\eta_m$ trouvés.

3. Procédé selon la revendication 2 **caractérisé en ce qu'**il comporte une étape d'évaluation de la moyenne et de l'écart type des incidences de chacun des émetteurs.

4. Procédé selon la revendication 2 **caractérisé en ce qu'**il comporte au moins les étapes suivantes :

   • déterminer les $M$ ensembles ($\Phi_m$ de vecteurs $\hat{\eta}_k$ associés au vecteur principal $\eta_m$.
   • déterminer les statistiques des composantes du vecteur $\eta_m$ à partir de l'ensemble $\Phi_m$ en utilisant une méthode d'Erreur Quadratique Moyenne.

**Claims**

1. Method for characterizing one or more transmitters and/or one or more parameters associated with a transmitter by using a reception station comprising a device adapted to measuring over time a set of K vectors of parameters $\hat{\eta}_k = \eta_m + e_k$ for $1 \leq k \leq K$ and $1 \leq m \leq M$ dependent on the transmitters associated with vectors $\eta_m$ representative of the transmitters for $1 \leq k \leq K$, where $\mathbf{e}_k$ is the noise vector associated with the $K^{th}$ measurement and $\eta_m$ the parameter vector associated with the $m^{th}$ transmitter, with at least one step of extracting the parameter or parameters consisting in grouping together by transmitter the parameters which are associated therewith by means of a technique of independent component analysis and **characterized in that** the step of associating the parameters for each transmitter M comprises at least the following steps:

   **Step No.1** Transforming the vectors $\hat{\eta}_k$ representative of the set of the K parameters for the M transmitters into vectors $f(\hat{\eta}_k)$ by using a bijective function $\tilde{f}()$ and where the $1^{st}$ component of $f(\hat{\eta}_k)$ being equal to 1,
   **Step No.2** determining a covariance matrix $\hat{\mathbf{R}}_{xx}$ from the vectors $f(\hat{\eta}_k)$ and decomposing it into eigenelements, so as to obtain its eigenvalues,
   Where $\hat{\mathbf{R}}_{xx}$ is a matrix related to the vectorial space of the M signatures $f(\eta_m) \otimes f(\eta_m)$ of the transmitters.
   **Step No.3** Calculating the rank $M$ of the matrix $\hat{\mathbf{R}}_{xx}$ from its eigenvalues found in step 2,
   **Step No.4** Calculating a square root of $\hat{\mathbf{R}}_{xx}$ with its $M$ dominant eigenelements: $\hat{\mathbf{R}}_{xx}^{1/2} = \mathbf{E}_s \, \Lambda_s^{1/2}$ where $\mathbf{E}_s$ corresponds to the eigenvectors and $\Lambda_s$ to the M largest eigenvalues,

   **Step No.5** Deducing from $\hat{\mathbf{R}}_{xx}^{1/2}$ the matrices $\Gamma_n$ according to $\hat{\mathbf{R}}_{xx}^{1/2} = \begin{bmatrix} \boldsymbol{\Gamma}_1 \\ \vdots \\ \boldsymbol{\Gamma}_N \end{bmatrix} = \mathbf{B} \, \mathbf{U}^{\mathrm{H}}$,

   with B = [$f(\eta_1) \otimes f(\eta_1) \ \dots \ f(\eta_M) \otimes f(\eta_M)$],
   U: unitary matrix, $\mathbf{U}^{\mathrm{H}} \cdot \mathbf{U} = \mathbf{I}_M$,
   $\mathbf{I}_M$: identity matrix of dimension NxN,
   with $\Gamma_n = A\Phi_n \, \mathbf{U}^{\mathrm{H}}$

$$\mathrm{A} = [f(\boldsymbol{\eta}_1) \ldots f(\boldsymbol{\eta}_M)];$$

$$\Phi_n = \mathtt{diag}\ \{f(\boldsymbol{\eta}_1) \ldots f(\boldsymbol{\eta}_M)\};$$

$f_n(\eta_m)$ n$^{th}$ component of the vector $f(\eta_m)$ of dimension Nx1 calculating $\Psi_{ij}$ according to

$$\boldsymbol{\Psi}_{ij} = \boldsymbol{\Gamma}_i{}^{\#}\boldsymbol{\Gamma}_j = \mathbf{U}\ \boldsymbol{\Phi}_i^{-1}\boldsymbol{\Phi}_j\ \mathbf{U}^{\mathrm{H}} \quad \text{for } (1 \leq i \leq N \text{ and } j < i),$$

$\Gamma^{\#}$ pseudo-inverse such that $\Gamma\# = (\Gamma\#\Gamma)^{-A}\Gamma^H$

where the columns of each matrix $\Gamma_n$ define the same space vector as the signatures $f(\eta_m)$ of the M transmitters,

**Step No.6** The unitary matrix **U** is identified by joint diagonalization of the $\Psi_{ij}$ for $(1 \leq i \leq N$ and $j < i)$,

**Step No.7** Determining the vectors $f(\eta_m)$ from the columns $\mathbf{b}_m$ of the matrix $\hat{\mathbf{R}}_{xx}{}^{1/2}\mathbf{U}$ where U is the unitary matrix: Transformation of column $\mathbf{b}_m$ into the matrix $\mathbf{B}_m$ according to

$$\mathbf{B}_m = [\mathbf{b}_{m1}\ \ldots\ \mathbf{b}_{mN}] = f(\boldsymbol{\eta}_m)\ f(\boldsymbol{\eta}_m)^{\mathrm{T}}\ \sqrt{\rho_m}\ ,\ \rho_m \text{ being the number of vectors } f(\hat{\eta}) \text{ associated with the}$$

vector $f(\eta_m)$ and extraction of this matrix from the singular vector $\mathbf{e}_m$ associated with the largest singular value so as to perform $f(\eta_m) = \mathbf{e}_m / \mathbf{e}_m$ (1) with $\mathbf{e}_m$ (1) the first component of the vector $\mathbf{e}_m$,

**Step No.8** Applying the inverse transform of the function $\tilde{f}()$ so as to deduce therefrom the vectors $\eta_m$.

2. Method according to Claim 1 **characterized in that** it comprises at least one step of evaluating the statistics of the components of the vectors $\eta_m$ found.

3. Method according to Claim 2 **characterized in that** it comprises a step of evaluating the mean and the standard deviation of the incidences of each of the transmitters.

4. Method according to Claim 2 **characterized in that** it comprises at least the following steps:

   • determining the M sets $\Phi_m$ of vectors $\hat{\eta}_k$ associated with the principal vector $\eta_m$
   • determining the statistics of the components of the vector $\eta_m$ from the set $\Phi_m$ by using a Mean Square Error procedure.

**Patentansprüche**

1. Verfahren zur Charakterisierung eines oder mehrerer Emitter und/oder eines oder mehrerer einem Emitter zugeordneter Parameter unter Verwendung einer Empfangsstation, die eine Vorrichtung aufweist, welche geeignet ist, im Laufe der Zeit eine Gruppe von K Parameter-Vektoren $\hat{\eta}_k$ = $\eta_m$+$\mathbf{e}_k$ zu messen für $1 \leq k \leq K$ und $1 \leq m \leq M$ abhängig von den Emittern, die Vektoren $\eta_m$ zugeordnet sind, welche für die Emitter für $1 \leq k \leq K$ repräsentativ sind, wobei $\mathbf{e}_k$ der der k-ten Messung zugeordnete Rauschvektor und $\eta_m$ der dem m-ten Emitter zugeordnete Parameter-Vektor ist, mit mindestens einem Schritt der Extraktion des oder der Parameter, der darin besteht, pro Emitter die ihm zugeordneten Parameter mittels einer Technik der unabhängigen Komponentenanalyse zusammenzufassen, und **dadurch gekennzeichnet, dass** der Schritt der Zuordnung der Parameter für jeden Emitter M mindestens die folgenden Schritte aufweist:

   **Schritt Nr. 1** Umwandeln der für die Gruppe der K Parameter für die M Emitter repräsentativen Vektoren $\hat{\eta}_k$ in Vektoren f($\hat{\eta}_k$) unter Verwendung einer eineindeutigen Funktion $\tilde{f}$ () und wobei die erste Komponente von f($\hat{\eta}_k$) gleich 1 ist,
   **Schritt Nr. 2** Bestimmen einer Kovarianzmatrix $\hat{\mathbf{R}}_{xx}$ ausgehend von den Vektoren f($\hat{\eta}_k$) und ihr Zerlegen in Eigenelemente, um ihre Eigenwerte zu erhalten, wobei $\hat{\mathbf{R}}_{xx}$ eine Matrix ist, die mit dem Vektorraum der M Signaturen f{$\eta_m$}⊗f($\eta_m$) der Emitter verbunden ist,
   **Schritt Nr. 3** Berechnen des Rangs M der Matrix $\hat{\mathbf{R}}_{xx}$ ausgehend von ihren im Schritt 2 gefundenen Eigenwerten,
   **Schritt Nr. 4** Berechnen einer Quadratwurzel von $\mathbf{R}_{xx}$ mit ihren M dominanten Eigenelementen: $\hat{\mathbf{R}}_{xx}{}^{1/2} = \mathbf{E}_s\Lambda_s{}^{1/2}$,

wobei $\mathbf{E}_s$ den Eigenvektoren und $\Lambda_s$ den M höchsten Eigenwerten entspricht,

Schritt Nr. 5 Ableiten von $\hat{\mathbf{R}}_{xx}^{1/2}$ der Matrizen $\Gamma_n$ gemäß $\hat{\mathbf{R}}_{xx}^{1/2} = \begin{bmatrix} \mathbf{\Gamma}_1 \\ \vdots \\ \mathbf{\Gamma}_N \end{bmatrix} = \mathbf{BU}^{\mathrm{H}}$,

mit B = $[f(\eta_\Lambda)\otimes f(\eta_\Lambda) \dots f(\eta_M)\otimes(\eta_M)$,
U: Einheitsmatrix; $U^H.U = I_M$,
$I_M$: Identitätsmatrix der Dimension NxN,
mit $\Gamma_n = \mathbf{A}\Phi_n\mathbf{U}^H$

$$A = [f(\eta_M) \dots f(\eta_M)];$$

$$\Phi_n = \mathrm{diag}\{f_n(\eta_\Lambda) \dots f_n(\eta_M)\};$$

$f_n(\eta_m)$: n-te Komponente des Vektors $f(\eta_m)$ der Dimension NxΛ
und ausgehend von den $\Gamma_n$

Berechnen von $\Psi_{ij}$ gemäß $\Psi_{ij} = \Gamma_i^{\#}\Gamma_j = U\Phi_i^{-1}\Phi_j U^{\mathrm{H}}$ für ($1 \leq i \leq N$ und j < i),

$\Gamma^{\#}$: Pseudoinverse derart, dass gilt $\Gamma^{\#} = (\Gamma^H\Gamma)^{-1}\Gamma^H$
wobei die Spalten jeder Matrix $\Gamma_n$ den gleichen Vektorraum definieren wie die Signaturen $f(\eta_m)$ der M Emitter,
**Schritt Nr. 6** ausgehend von der gemeinsamen Diagonalisierung der $\Psi_{ij}$ für ($1 \leq i \leq N$ und j < i), Identifizieren der Einheitsmatrix **U**,
**Schritt Nr. 7** Bestimmen der Vektoren $f(\eta_m)$ ausgehend von den Spalten $\mathbf{b}_m$ der Matrix $\hat{\mathbf{R}}_{xx}^{1/2}\mathbf{U}$, wobei U die Einheitsmatrix ist: Umwandlung der Spalte $\mathbf{b}_m$ in die Matrix $\mathbf{B}_m$ gemäß

$$\mathbf{B}m = [\mathbf{b}_{m1} \dots \mathbf{b}_{mN}] = f(\mathbf{\eta}_m) f(\mathbf{\eta}_m)^{\mathrm{T}}\sqrt{\rho_m},$$ wobei $\rho_m$ die Anzahl von dem Vektor $f(\eta_m)$ zugeordneten Vektoren $f(\hat{\eta}k)$ ist, und Extraktion aus dieser Matrix des Einzelvektors $\mathbf{e}_m$, der dem höchsten Einzelwert zugeordnet ist, um $f(\eta_m) = \mathbf{e}_m/\mathbf{e}_m(1)$ auszuführen, wobei $\mathbf{e}_m(1)$ die erste Komponente des Vektors $\mathbf{e}_m$ ist,
**Schritt Nr. 8** Anwenden der inversen Transformation der Funktion $\tilde{f}()$, um daraus die Vektoren $\eta_m$ abzuleiten.

2. Verfahren nach Anspruch 1, **dadurch gekennzeichnet, dass** es mindestens einen Schritt der Bewertung der Statistiken der Komponenten der gefundenen Vektoren $\eta_m$ aufweist.

3. Verfahren nach Anspruch 2, **dadurch gekennzeichnet, dass** es einen Schritt der Bewertung des Mittelwerts und der Standardabweichung der Einfallwinkel jedes der Emitter aufweist.

4. Verfahren nach Anspruch 2, **dadurch gekennzeichnet, dass** es mindestens die folgenden Schritte aufweist:

• Bestimmen der M Gruppen $\Phi_m$ von dem Hauptvektor $\eta_m$ zugeordneten Vektoren $\hat{\eta}_k$,
• Bestimmen der Statistiken der Komponenten des Vektors $\eta_m$ ausgehend von der Gruppe $\hat{\mathbf{R}}_m$ unter Verwendung einer Methode des mittleren quadratischen Fehlers.

FIG.1

FIG.2

FIG.3

FIG.4

FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Numerical Modeling for the Localization and the Assesment of Electromagnetic Field Sources. *IEEE Transactions on Magnetics,* Mai 2003, vol. 38 (3
- **L.ALBERA ; A.FERREOL ; P.CHEVALIER ; P.COMON.** ICAR, un algorithme d'ICA à convergence rapide, robuste au bruit. *GRETSI 2003,* Septembre 2003
- **L.ALBERA ; A.FERREOL ; P.CHEVALIER.** *ICA2003 , Nara (Japon),* Avril 2003
- **P. COMON.** Signal Processing. Elsevier, 1994, vol. 36, 287-314
- **O.MICHEL ; P.LARZABAL ; H.CLERGEOT.** Test de détection du nombre de sources corrélées pour les méthodes HR en traitement d'antenne. *GRETSI 91*
- **J.F. CARDOSO ; A. SOULOUMIAC.** *IEE Proceedings-F,* Décembre 1993, vol. 140 (6), 362-370